# NEUE EUROPÄISCHE PATENTSCHRIFT

(11) **EP 0 446 849 B2**
(45) Veröffentlichungstag und Bekanntmachung des Hinweises auf die Entscheidung über den Einspruch: **02.01.2002**
(45) Hinweis auf die Patenterteilung: 13.12.1995
(21) Anmeldenummer: 91103717.4
(22) Anmeldetag: 11.03.1991
(51) Int. Cl.: G05D 5/03, B24B 53/053, B24B 49/18

(54) **Vorrichtung zur Überwachung von Bearbeitungsprozessen**
Device for monitoring a tooling process
Dispositif pour le contrôle d'une opération d'usinage

(30) Priorität: 12.03.1990 DE 4007838
(43) Veröffentlichungstag der Anmeldung: 18.09.1991
(73) Patentinhaber: Walter Dittel GmbH Luftfahrtgerätebau, 86899 Landsberg (DE)
(72) Erfinder: Müller-Gall, Reinhard, Dipl.-Ing. FH, W-8913 Schondorf (DE); Steinbrenner, Alfred, Dipl.-Ing. FH, W-8911 Weil (DE)
(74) Vertreter: Manitz, Finsterwald & Partner GbR

(56) Entgegenhaltungen:
- EP-A- 0 117 354
- DE-A- 2 612 981
- DE-A- 3 330 519
- DE-A- 3 503 347
- DE-A- 3 537 904
- DE-A- 3 833 364
- FR-A- 1 520 376
- GB-A- 2 166 242
- GB-A- 2 177 205
- US-A- 2 866 301
- US-A- 4 332 161
- US-A- 4 831 785
- PATENT ABSTRACTS OF JAPAN, Band 6, Nr. 2 (P-96)[880], 8. Januar 1982 & JP-A-56 128 430
- Handbuch für elektrisches Messen mechanischer Grössen. C.Rohrbach, VDE-Verlag GmbH,Düsseldorf,1967,Seiten 240,343 und 344
- Handbuch BW 33-82-01 "überwachung und Diagnose von Maschinen und Prozessen" zum Seminar mit Praktikum vom 03. und 04. Juni 1985,BW 6613:Stand und Entwicklung in der Sensortechnik,Seiten 11 und 12,VDI-Bildungswerk
- Katalog der Firma Rim,München,1967,Seiten 44 und 45
- D.Nürmann:Das grosse Werkbuch Elektronik,Teil A,Franzis Verlag München,5.Auflage,1989,Seiten 805 und 806

## Beschreibung

Die Erfindung betrifft eine Vorrichtung zur Erkennung von Berührungen zwischen einer ersten Körper bildenden Schleifscheibe oder Abrichteinheit einerseits und einem zu schleifenden, einen zweiten Körper bildenden Werkstück bzw. einer abzurichtenden Schleifscheibe andererseits nach dem Oberbegriff des Patentanspruchs 1.

Bei einer bekannten Vorrichtung dieser Art (EP 0 117 354 A1) wird über ein Spulenpaar von einem Oszillator stammende Energie auf im drehenden Teil befindlichen Spulen eingekoppelt, um dann über ein weiteres Spulenpaar wieder ausgekoppelt und einem Trägerkreis zugeführt zu werden. Bei einem anderen Ausführungsbeispiel werden von am Werkzeug angeordneten Piezoelementen erzeugte elektrische Signale nach Verstärkung über einen Optokoppler auf einen feststehenden Trägerkreis übertragen.

Es ist auch bereits bekannt (Handbuch für elektrisches Messen mechanischer Größen von Rohrbach, VDI-Verlag Düsseldorf 1967, Seiten 344, 345), einen Geber, der auch piezoelektrischer Natur sein kann, auf einer Welle anzuordnen und die von ihm abgegebenen elektrischen Signale zu einer den Endbereich der Welle umgebenden Spule zu führen. Rund um die Spule ist ein den Magnetfluß der Spule führendes Gehäuse angeordnet, welches sich von einem gegenüber der freien Stirnseite der Welle vorhandenen Luftspalt zu einer Stelle am Umfang der Welle erstreckt, wo ebenfalls ein Luftspalt vorgesehen ist. In dem an der freien Stirnseite der Welle vorgesehenen Luftspalt befindet sich eine Hallsonde, welche den vom Geber erzeugten Strom mißt.

Das Ziel der Erfindung besteht darin, eine Vorrichtung der eingangs genannten Gattung so auszubilden, daß bei einfachster und kompakter Ausbildung der im drehenden Körper befindlichen Komponenten auch geringste Berührungen zwischen Schleifscheibe und Werkstücke bzw. Abrichteinheit sicher erkannt werden können.

Zur Lösung dieser Aufgabe sind die Merkmale des kennzeichnenden Teils des Patentanspruchs 1 vorgesehen.

Erfindungsgemäß liefert also das Piezoelement nicht nur die Körperschallsignale, sondern gleichzeitig damit auch genügend elektrische Energie für die transformatorische Überbrückung des Luftspalts, wodurch ein einfacher, kompakter, kostengünstiger und betriebssicherer Körperschallaufnehmer geschaffen wird. Besonders vorteilhaft ist auch die berührungslose Übertragung des vom Körperschallsensor gelieferten elektrischen Signals. Die Übertragungseinrichtung arbeitet auf diese Weise verschleißfrei, und die rotierenden Teile (Körperschallsensor und erstes Übertragungselement) kommen ohne zusätzliche Hilfsenergie aus, da das vom Körperschallaufnehmer gelieferte elektrische Signal ohne nennenswerte Dämpfung auf das zweite feststehende Übertragungselement und von dort in die Auswerteelektronik übertragen werden kann. Durch die Anordnung aller für die Signalerzeugung und Übertragung erforderlichen Elemente an der freien Stirnseite der Welle axial hintereinander wird eine besonders platzsparende kompakte Ausbildung gewährleistet, so daß die erfindungsgemäße Vorrichtung ohne wesentliche Umbaumaßnahmen an bestehenden Drehkörpern angebracht werden kann.

Die Ausbildung nach Anspruch 2 erlaubt eine sichere induktive Übertragung des vom Körperschallsensor gelieferten elektrischen Signals.

Die Ausbildung nach Anspruch 3 arbeitet besonders wirksam und verlustfrei.

Besonders vorteilhaft ist die Ausbildung nach Anspruch 4, wobei durch den sehr geringen Luftspalt zwischen dem ersten und dem zweiten Übertragungselement gewährleistet wird, daß auch kleinste Signale mit für die Auswertung ausreichender Amplitude vom KörperschallaufnehmerzurAusweerteeinrichtung gelangen.

Für die Übertragung des Körperschalls ist die Ausbildung nach Anspruch 5 günstig. Hierdurch sind sowohl Sensor als auch Übertragungseinrichtung im Zentrum des Rotationssystems angeordnet sind, wodurch eine sichere Übertragung mit geringstem Luftspalt ermöglicht wird. Das Vorsehen der Glocke dient dabei dem Schutz der Übertragungseinrichtungen, wobei die Ausbildung nach Anspruch 6 besonders vorteil haft ist, da die Glocke dort gleichzeitig eine Abschirmung gegen von außen einwirkende elektromagnetische Einflüsse bildet.

Die Ausbildung der Auswerteeinheit nach Anspruch 7 erlaubt ein schnelles und sicheres Isolieren des Körperschallsignals aus dem Umgeburigsrauschen der Schleifmaschine.

Der hohe Dynamikbereich des Meßverstärkers nach Anspruch 8 läßt es zu, nahezu die gesamte Bandbreite der bei der erfindungsgemäßen Vorrichtung auftretenden Geräuschstärken ohne Umschalten der Empfindlichkeit des Meßverstärkers zu verarbeiten. Durch die hohe Empfindlichkeit steht auch nahezu der gesamte Signalumfang für eine Verarbeitung durch den Signalverarbeitungsprozessor der Auswerteeinheit zur Verfügung.

Die Ausbildung nach Anspruch 9 erlaubt eine direkte Beeinflussung der Zustelleinrichtung.

Die Erfindung wird nachfolgend anhand eines Beispiels unter Bezugnahme auf die Zeichnung näher erläutert; in dieser zeigt :
- Fig. 1: die Seitenansicht einer als Schleifscheibe ausgebildeten Werkzeugmaschine mit einer erfindungsgemäßen Vorrichtung und
- Fig. 2: ein Blockschaltbild der Signalverarbeitung.

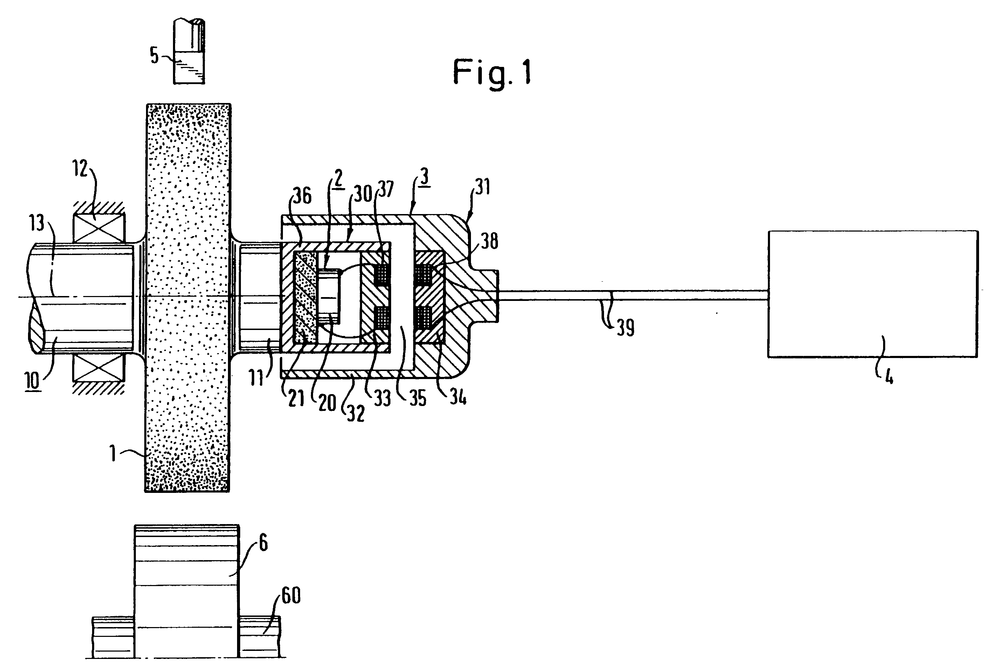

In Fig. 1 ist eine Schleifscheibe 1 dargestellt, deren Schleifscheibenwelle 10 in einem Wellenlager 12 gelagert ist. Die Schleifscheibenwelle 10 ist am linken Ende in Fig. 1 geschnitten dargestellt und setzt sich dort zu einem Antrieb fort. Die Schleifscheibe dreht sich mit ihrer Schleifscheibenwelle 10 um die Achse 13.

Am freien Ende 11 der Schleifscheibenwelle 10 sind ein Körperschallsensor 2 sowie eine Übertragungseinrichtung 3 für die vom Körperschallsensor ausgehenden elektrischen Signale vorgesehen.

Der Körperschallsensor 2 besteht aus einem piezoelektrischen Element 20, das auf einem Isolator 21 angebracht ist, welcher am Boden des becherförmigen Gehäuses 36 eines ersten Übertragungselements 30 angeordnet ist. Der Boden des becherförmigen Gehäuses 36 sitzt dabei auf der Stirnseite des freien Endes 11 der Schleifscheibenwelle 10.

Die vorgenannten Teile stehen untereinander in gutem Berührungskontakt und sind zur Erzielung einer guten mechanischen Kopplung vorzugsweise miteinander verklebt, so daß eine maximale Körperschallübertragung von der Schleifscheibenwelle 10 über den Boden des becherförmigen Gehäuses 36, den Isolator 21 auf das piezoelektrische Element 20 gewährleistet ist.

Das vom freien Ende 11 der Schleifscheibenwelle 10 wegweisende, offene Ende des becherförmigen Gehäuses 36 nimmt den Schalenkern einer ersten Spule 33 auf, deren Wicklungen 37 mit dem piezoelektrischen Element 20 elektrisch verbunden sind. Das becherförmige Gehäuse 36 bildet somit zusammen mit dem Isolator 21, dem piezoelektrischen Element 20 und der mit diesem verbundenen Spule 33 eine Sensoreinheit, die gleichzeitig das erste Übertragungselement 30 enthält. Die Sensoreinheit ist in Fig. 1 rotationssymmetrisch zurAchse 13 dargestellt, wobei der Sensor im Zentrum des Rotationssystems angeordnet ist, kann jedoch auch exzentrisch auf der Schleifscheibenwelle 10 angeordnet sein.

Ein gegenüber der rotierenden Anordnung von Schleifscheibe 1, Schleifscheibenwelle 10 und erstem Übertragungselement 30 feststehendes zweites Übertragungselement 31 ist unter Ausbildung eines Luftspalts 35 in geringem axialen Abstand zum ersten Übertragungselement 30 angeordnet.

Das zweite Übertragungselement 31 besitzt die Form einer das erste Übertragungselement 30 und den Sensor 2 übergreifenden Glocke 32. Im Boden der Glocke ist der Schalenkern einer zweiten Spule 34 versenkt angeordnet. Die zweite Spule 34 ist der ersten Spule 33 gegenübergelegen, wobei zwischen den beiden Spulen der Luftspalt 35 liegt. Die Wicklung 38 der zweiten Spule 34 ist über zwei verdrillte, geschirmte Anschlußleitungen 39 mit dem Eingang einer Auswerteeinheit 4 verbunden.

Der hohlzylindrische Abschnitt der Glocke 32 übergreift dabei mit geringem radialen Abstand das becherförmige Gehäuse 36 des ersten Übertragungselements 30 und ist so ausgebildet, daß er das erste Übertragungselement 30 vor elektromagnetischer Einstrahlung von außen abschirmt. Auch das becherförmige Gehäuse 36 des ersten Übertragungselements ist als Abschirmgehäuse gegen elektromagnetische Strahlung ausgebildet.

Während des Kontaktes der Schleifscheibe 1 mit dem zu bearbeitenden Werkstück 5 oder der Abrichteinheit 6 mit deren Welle 60 werden die sich drehenden Teile zu Körperschallschwingungen angeregt. Diese Schwingungen werden über die Schleifscheibe 1 sowie über die Schleifscheibenwelle 10, den Boden des becherförmigen Gehäuses 36, den Isolator auf die mit diesem verklebte piezoelektrische Scheibe 20 übertragen und dort in elektrische Schwingungen umgewandelt. Diese elektrischen Schwingungen werden dann auf die Wicklung 37 der ersten Spule 33 übertragen. Die erste Spule 33 ist dabei an das piezoelektrische Element 20 derart angepaßt, daß die Kapazität des als Piezoscheibe ausgebildeten piezoelektrischen Elements durch die Primärinduktivität kompensiert wird.

Das vom piezoelektrischen Element 20 gelieferte elektrische Signal wird von der ersten Spule 33 induktiv auf die zweite Spule 34 übertragen. Durch die an die Piezoscheibe 20 angepaßte erste Spule 33 und den zwischen den beiden Spulen gelegenen sehr geringen Luftspalt 35 ist die Signalübertragung so wirksam, daß auf der rotierenden Seite (im ersten Übertragungselement 30) keine elektrische Hilfsenergie erforderlich ist.

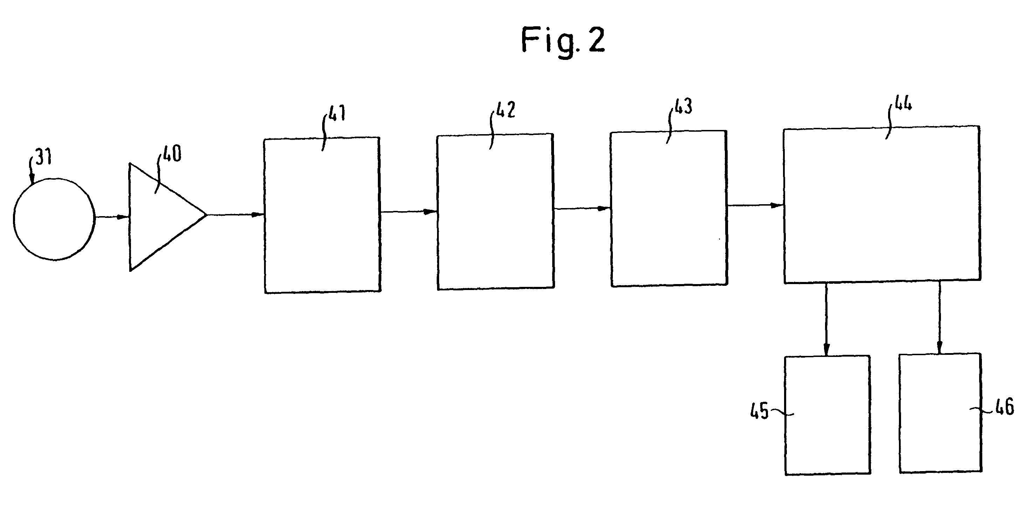

Das von der zweiten Spule 34 aufgenommene elektrische Signal wird über die Anschlußleitungen 39 dem Eingang der Auswerteeinheit 4 zugeführt. In der Auswerteeinheit 4 (Fig. 2) werden die eingehenden Signale zunächst in einem Meßverstärker 40 verstärkt. Der Meßverstärker 40 verfügt über einen sehr hohen Dynamikbereich von ca. 70 dB, so daß sich nahezu alle auftretenden Geräuschstärken ohne Umschalten des Meßverstärkers verarbeiten lassen. Der gesamte Signalumfang steht somit für die Verarbeitung durch die Auswerteeinheit 4 zur Verfügung.

Dem Meßverstärker 40 ist ein Bandfilter 41 nachgeschaltet. Nach dem Bandfilter durchläuft das elektrische Signal einen Gleichrichter 42 mit Tiefpaß und wird daraufhin einem Analog-Digital-Wandler 43 zugeführt.

Die aus dem Analog-Digital-Wandler 43 austretenden Digitalimpulse werden dann einem Signalverarbeitungsprozessor 44 zugeführt, der die eingehenden Signale auswertet und beispielsweise eine das Berühren der Schleifscheibe anzeigende Anzeigeeinrichtung 45 beaufschlagt. Weiterhin kann der Signalverarbeitungsprozessor 44 eine Schalteinrichtung 46 beaufschlagen, die ihrerseits wieder den Antriebsmotor zum Zustellen der Schleifscheibenwelle 10 bzw. die nicht gezeigte Vorschubeinrichtung der Schleifscheibenanordnung steuert.

Die dem Signalverarbeitungsprozessor zugeführten Signale können darüber hinaus auch Informationen über den Ablauf des Bearbeitungsprozesses, im vorliegenden Beispiel des Schleifprozesses, liefern, aus denen dann Rückschlüsse auf beispielsweise dem Zustand des Bearbeitungswerkzeugs (hier: der Schleifscheibe) oder den Zustand des zu bearbeitenden Werkstücks gezogen werden können. So ist es beispielsweise möglich, durch zu hohe Bearbeitungstemperaturen hervorgerufene Oberflächenveränderungen des Werkstücks, wie beispielsweise Gefügeveränderungen, mittels der Auswertung des Körperschallsignals zu erkennen und den Bearbeitungsprozeß entsprechend zu steuern.

Anstelle der Anordnung des Körperschallsensors 2 und der Übertragungseinrichtung 3 an der Schleifscheibe 1 bzw. an der Welle 10 der Schleifscheibe 1 kann die Anordnung dieser Teile auch an der rotierenden Abrichteinheit 6 bzw. der Welle 60 der beispielsweise als Abrichtrolle ausgebildeten Abrichteinheit 6 erfolgen. Eine derartige Anordnung erlaubt ebenso das Erkennen der Berührung zwischen Schleifscheibe 1 und Abrichteinheit 6 und besitzt die gleichen Vorteile wie die vorher beschriebene Anordnung.

## Patentansprüche

1. Vorrichtung zur Erkennung von Berührungen zwischen einer einen ersten Körper bildenden Schleifscheibe (1) oder Abrichteinheit (6) einerseits und einem zu schleifenden, einen zweiten Körper bildenden Werkstück (5) bzw. einer abzurichtenden Schleifscheibe (1) andererseits mit einem Körperschallsensor (2) und einer ortsfesten Auswerteeinheit (4) zur Bestimmung eines beim Berühren auftretenden Körperschalls aufgrund eines elektrischen, dem Körperschall entsprechenden Signals vom Körperschallsensor (2), welcher drehfest mit einem der sich beim Schleifen drehenden, berührenden Körper, nämlich der Schleifscheibe (1) oder der Abrichteinheit (6) bzw. ihren Wellen (10; 60) verbunden ist, wobei zur Übertragung des dem Körperschall proportionalen elektrischen Signals vom Körperschallsensor (2) auf die Auswerteeinheit (4) eine Übertragungseinrichtung (3) vorgesehen ist, die ein erstes besonderes, sich mit dem drehenden Körper drehendes Übertragungselement (30) und ein zweites besonderes, ortsfestes Übertragungselement (31), die unter Ausbildung eines Luftspalts (35) berührungslos zusammenwirken, aufweist, und der Körperschallsensor (2) aus einem piezoelektrischen Element (20) besteht,
**dadurch gekennzeichnet,**
**daß** das Piezoelement nicht nur die Körperschallsignale, sondern gleichzeitig damit auch die genügende elektrische Energie für die transformatorische Überbrückung des Luftspalts liefert, daß das piezoelektrische Element (20) das erste Übertragungselement (30) ohne Zwischenschaltung eines Verstärkers und ohne Hilfsenergie direkt beaufschlagt und daß der Körperschallsensor (20) an der Innenseite des Bodens eines becherförmigen Gehäuses (36) angeordnet ist, die Außenseite des Bodens des Gehäuses (36) auf der Stirnseite des freien Endes (11) der Welle (10) sitzt und auf der von der Stirnseite des freien Endes (11) der Welle (10; 60) abgewandten Seite des Körperschallsensors (2) axial hintereinander das erste, mit dem Körperschallsensor (2) verbundene Übertragungselement (30) am becherförmigen Gehäuse (36) und unter Ausbildung des Luftspaltes (35) in geringem axialen Abstand zum ersten Übertragungselement (30) das zweite Übertragungselement (31) ortsfest angeordnet ist.

2. Vorrichtung nach Anspruch 1, **dadurch gekennzeichnet, daß** die Übertragungseinrichtung (3) aus einem Spulenpaar besteht, wobei das erste Übertragungselement (30) eine erte Spule (33) und das zweite Übertragungselement (31) eine zweite Spule (34) aufweist.

3. Vorrichtung nach Anspruch 1 oder 2, **dadurch gekennzeichnet, daß** die erste Spule (33) an das piezoelektrische Element (20) derart angepaßt ist, daß die Kapazität des piezoelektrischen Elementes (20) durch die Primärinduktivität der ersten Spule (33) kompensiert wird.

4. Vorrichtung nach einem der vorhergehenden Ansprüche, **dadurch gekennzeichnet, daß** der Luftspalt zwischen den Übertragungselementen (30, 31) zwischen 0,5 mm und 1,5 mm, insbesondere etwa 1 mm, beträgt.

5. Vorrichtung nach einem der vorhergehenden Ansprüche, **dadurch gekennzeichnet, daß** die erste Übertragungseinrichtung (30) am freien Ende (11) der Welle (10; 60) angebracht ist und daß die zweite Übertragungseinrichtung (31) in einer ortsfesten, das freie Ende (11) der Welle (10; 60) übergreifenden Glocke (32) vorgesehen ist.

6. Vorrichtung nach Anspruch 5, **dadurch gekennzeichnet, daß** die Glocke (32) gegen von außen einwirkende elektromagnetische Einflüsse abgeschirmt ausgebildet ist.

7. Vorrichtung nach einem der vorhergehenden Ansprüche, **dadurch gekennzeichnet, daß** die Auswerteeinheit (4) einen Meßverstärker (40), ein einstellbares Bandfilter (41), einen Gleichrichter (42) mit Tiefpaß und einen Analog-Digital-Wandler (43) aufweist, die das vom Körperschallsensor (2) gelieferte elektrische Signal aufbereiten und einem Signalverarbeitungsprozessor (44) zuführen, welcher eine Anzeigeeinrichtung (45) beaufschlagt.

8. Vorrichtung nach Anspruch 7, **dadurch gekennzeichnet, daß** der Meßverstärker (40) über einen Dynamikbereich von etwa 65 dB bis 75 dB, insbesondere etwa 70 dB, verfügt.

9. Vorrichtung nach Anspruch 7 oder 8, **dadurch gekennzeichnet, daß** der Signalverarbeitungsprozessor (44) eine Schalteinrichtung (46) für den Antriebsmotor zum Zustellen der Schleifscheibe (1) beaufschlagt.

## Claims

1. Apparatus for recognising contacts between, on the one hand, a grinding disk (1) or dressing unit (6) forming a first body and, on the other hand, a workpiece (5) or a grinding disk (1) to be dressed forming a second body, comprising a structure-borne noise sensor (2) and a processing unit (4) of fixed location for determining a structure-borne noise resulting during the contact on the basis of an electrical signal corresponding to the structure-borne noise from the structure-borne noise sensor (2) which is rotationally fixedly connected to one of the contacting bodies which rotates during grinding, namely to the grinding disk (1) or to the dressing unit (6) or to their shafts (10; 60), wherein a transmission device (3) is provided for the transmission of the electrical signal proportional to the structure-borne noise from the structure-borne noise sensor (2) to the processing unit (4) and has a first special transmission element (30) which rotates with the rotating body and a second special transmission element (31) of fixed location which cooperate in contact-free manner while forming an air gap (35) and wherein the structure-borne noise sensor (2) comprises a piezoelectric element (20), **characterised in that** the piezoelement not only delivers the structure-borne noise signals but rather simultaneously also the electrical energy sufficient for the transformatorial bridging of the air gap; **in that** the piezoelectric element (20) directly energises the first transmission element (30) without the intermediary of an amplifier and without auxiliary energy; and **in that** the structure-borne noise sensor (20) is arranged at the inside of the bottom of a beaker-shaped housing (36), the outside of the bottom of the housing (36) is seated on the end face of the free end (11) of the shaft (10) and, there are arranged axially in series at a fixed position at the side of the structure-borne noise sensor (2) remote from the end face of the free end (11) of the shaft (10; 60) the first transmission element (30), which is connected to the structure-borne noise sensor (2), at the beaker-shaped housing (36) and the second transmission element (31) at a slight axial spacing to the first transmission element (30) while forming the air gap (35)

2. Apparatus in accordance with claim 1, **characterised in that** the transmission device (3) comprises a coil pair with the first transmission element (30) having a first coil (33) and the second transmission element (31) having a second coil (34).

3. Apparatus in accordance with claim 1 or claim 2, **characterised in that** the first coil (33) is so matched to the piezoelectric element (20) that the capacity of the piezoelectric element (20) is compensated by the primary inductance of the first coil (33).

4. Apparatus in accordance with one of the preceding claims, **characterised in that** the air gap between the transmission elements (30, 31) amounts to between 0.5 mm and 1.5 mm and in particular to about 1 mm.

5. Apparatus in accordance with one of the preceding claims, **characterised in that** the first transmission device (30) is mounted at the free end (11) of the shaft (10; 60) and **in that** the second transmission device (31) is provided within a bell (32) of fixed location which engages over the free end (11) of the shaft (10; 60).

6. Apparatus in accordance with claim 5, **characterised in that** the bell (32) is formed so that it is screened against electromagnetic effects acting from the outside.

7. Apparatus in accordance with one of the preceding claims, **characterised in that** the evaluation unit (4) has a measurement amplifier (40), an adjustable band filter (41), a rectifier (42) with a low pass filter and an analog/digital converter (43) which process the electrical signal delivered by the structure-borne noise sensor (2) and pass it to a signal handling processor (44) which acts on a display device (45).

8. Apparatus in accordance with claim 7, **characterised in that** the measurement amplifier (40) has a dynamic range from about 65 dB to 75 dB, in particular approximately 70 dB.

9. Apparatus in accordance with claim 7 or claim 8, **characterised in that** the signal handling processor (44) acts on a switching device (46) for the drive motor for the infeed of the grinding disk (1).

## Revendications

1. Dispositif pour reconnaître des contacts entre d'une part un disque de meulage (1) ou une unité de dressage (6) formant un premier corps et d'autre part une pièce d'usinage (5) à meuler ou un disque de meulage (1) à dresser formant un second corps, comportant un détecteur de bruit de structure (2) et une unité d'évaluation fixe (4) pour déterminer un bruit de structure apparaissant lors du contact en raison d'un signal électrique du détecteur de bruit de structure (2), qui correspond au bruit de structure, ce détecteur étant relié solidairement en rotation à un corps en contact et en rotation lors du meulage, à savoir avec le disque de meulage (1) ou avec l'unité de dressage (6), ou avec leurs arbres (10 ; 60), et pour la transmission du signal électrique proportionnel au bruit de structure depuis le détecteur de bruit de structure jusqu'à l'unité d'évaluation, il est prévu un dispositif de transmission (3), qui présente un premier élément de transmission particulier (30) en rotation avec le corps en rotation, et un second élément de transmission particulier fixe (31), qui coopèrent sans contact en réalisant un entrefer (35), et le détecteur de bruit de structure (2) étant constitué par un élément piézo-électrique (20),
**caractérisé en ce que**
l'élément piézo-électrique envoie non seulement les signaux de bruit de structure, mais simultanément avec ceux-ci également l'énergie électrique suffisante pour le pontage par effet transformateur de l'entrefer, **en ce que** l'élément piézo-électrique (20) attaque directement le premier élément de transmission (30) sans interconnexion d'un amplificateur et sans énergie auxiliaire, et **en ce que** le détecteur de bruit de structure (2) est disposé contre la face intérieure du fond d'un boîtier en forme de godet (36), la face extérieure du fond du boîtier (36) repose contre la face frontale de l'extrémité libre (11) de l'arbre (10), et sur le côté du détecteur de bruit de structure (2) détourné de la face frontale de l'extrémité libre (11) de l'arbre (10 ; 60) sont agencés axialement l'un derrière l'autre et de façon stationnaire le premier élément de transmission (30) relié au détecteur de bruit de structure (2) contre le boîtier en forme de godet (36) et, en formant l'entrefer (35), le second élément de transmission (31) à faible distance axiale du premier élément de transmission (30).

2. Dispositif selon la revendication 1, **caractérisé en ce que** le dispositif de transmission (3) est constitué par une paire de bobines, le premier élément de transmission (30) présentant une première bobine (33) et le second élément de transmission (31) présentant une seconde bobine (34).

3. Dispositif selon l'une ou l'autre des revendications 1 et 2, **caractérisé en ce que** la première bobine (33) est adaptée à l'élément piézo-électrique (20) de telle sorte que la capacité de l'élément piézo-électrique (20) est compensée par l'inductivité primaire de la première bobine (33).

4. Dispositif selon l'une quelconque des revendications précédentes, **caractérisé en ce que** l'entrefer entre les éléments de transmission (30, 31) est de 0,5 mm à 1,5 mm, en particulier d'environ 1 mm.

5. Dispositif selon l'une quelconque des revendications précédentes, **caractérisé en ce que** le premier dispositif de transmission (30) est disposé à l'extrémité libre (11) de l'arbre (10 ; 60), et **en ce que** le second dispositif de transmission (31) est prévu dans une cloche (32) fixe qui recouvre l'extrémité libre (11) de l'arbre (10 ; 60).

6. Dispositif selon la revendication 5, **caractérisé en ce que** la cloche (32) est réalisée de façon protégée contre les influences électromagnétiques agissant depuis l'extérieur.

7. Dispositif selon l'une quelconque des revendications précédentes, **caractérisé en ce que** l'unité d'évaluation (4) présente un amplificateur de mesure (40), un filtre à bande réglable (41), un redresseur (42) avec passe-bas, et un transformateur analogique/numérique (43) qui traitent le signal électrique envoyé par le détecteur de bruit de structure (2) et qui l'amènent à un processeur de traitement de signaux (44), qui est raccordé à un dispositif d'indication (40).

8. Dispositif selon la revendication 7, **caractérisé en ce que** l'amplificateur de mesure (40) dispose d'une plage dynamique de 65 dB à 75 dB, en particulier d'environ 70 dB.

9. Dispositif selon l'une ou l'autre des revendications 7 et 8, **caractérisé en ce que** le processeur de traitement des signaux (44) attaque un dispositif de commutation (46) pour le moteur d'entraînement pour l'approche du disque de meulage (1).
